# EUROPÄISCHE PATENTANMELDUNG

(11) **EP 3 462 525 A1**
(43) Veröffentlichungstag der Anmeldung: **03.04.2019**
(21) Anmeldenummer: 18197253.0
(22) Anmeldetag: 27.09.2018
(51) Int. Cl.: H01M 4/58, H01M 4/36, H01M 4/62, H01M 10/052, H01M 2/02, H01M 2/10

(54) **UMMANTELUNG VON STRUKTURBATTERIEN**

(30) Priorität: 28.09.2017 DE 102017122564
(71) Anmelder: Airbus Operations GmbH, 21129 Hamburg (DE)
(72) Erfinder: Die Erfindernennung liegt noch nicht vor

(57) **Zusammenfassung**

Batterie mit einer Mehrzahl von Schichten umfassend eine erste Schicht, die elektrisch leitend ist, eine zweite Schicht, die im Wesentlichen aus kohlenstofffaserverstärktem Kunststoff besteht, eine dritte Schicht, die aus glasfaserverstärktem Kunststoff besteht, eine vierte Schicht, die kohlenstofffaserverstärkten Kunststoff und LiFePO₄ besteht, wobei das Gewichtsverhältniss von LiFePO₄ zu Kohlenstofffaser 2:1 bis 2,5 zu 1 beträgt, eine fünfte Schicht, die elektrisch leitend ist, dadurch gekennzeichnet dass die Batterie im Wesentlichen von einer Schicht aus glasfasergefülltem Polyester umhüllt ist.

## Beschreibung

### Gebiet der Erfindung

Die Erfindung betrifft Strukturbatterien, insbesondere Strukturbatterien für den Fahrzeugbau, insbesondere Strukturbatterien für den Flugzeugbau oder die Raumfahrt, oder für die Verwendung in einem Fahrzeug, insbesondere in einem Flugzeug oder einem Raumfahrzeug. Die Erfindung betrifft weiterhin ein Verfahren zum Herstellen von Strukturbatterien.

### Hintergrund der Erfindung

In vielen Fahrzeugen, insbesondere in der Luftfahrt oder der Raumfahrt werden hohe Anforderungen an eine Energiespeicherdichte von Energiespeichern gestellt, d.h. es soll möglichst viel elektrische Energie pro Gewichtseinheit des Energiespeichers gespeichert werden können. Unter Energiespeichern können beispielsweise Batterien und, bevorzugt, wiederaufladbare Akkumulatoren verstanden werden, beispielsweise zur Verwendung in Elektro- oder Hybridfahrzeugen. Die Energiespeicherdichte (oder Energiedichte, engl. "energy density") wird beispielsweise in Wattstunden pro Kilogramm (Wh/kg) gemessen.

Batterien umfassen eine Anode, eine Kathode und einen Elektrolyten, in den beide Elektroden eintauchen. Diese bilden zusammen eine Zelle. Es gibt auch Batterien, die aus einer Aneinanderreihung mehrerer Zellen bestehen. Oft sind Anode und Kathode durch eine Trennschicht, einen sogenannten Separator voneinander getrennt. Batterien können feste, flüssige oder polymere Elektrolyten enthalten. Weiterhin können Sie so gestaltet sein, dass sie wieder aufladbar sind. Den meisten Batterien ist gemein, dass sie eine verhältnismäßig geringe spezifische Ladung aufweisen, daß heißt zum Transport großer Strommengen benötigt man hohe Gewichte an Batterien. Daher hat es nicht an Versuchen gefehlt, Batterien möglichst leicht und klein zu gestalten, etwa durch Verwendung leichter Elektroden auf Polymerbasis. Eine andere Idee war es, Batterien mit zusätzlichen Funktionen zu entwickeln, so genannte multifunktionale Batterien. Eine solche Zusatzfunktion liegt beispielsweise vor, wenn die Batterie zugleich eine tragende Funktion aufweist. Solche Batterien mit zusätzlichen lasttragenden Eigenschaften werden auch als Strukturbatterien bezeichnet. Vereinzelt werden sie als laminiertes elektrisches Energiespeichersystem bezeichnet.

Die Druckschrift US 9,276,240 B2 beschreibt eine flache, laminierte Batterieanordnung, deren Seitenflächen kleiner sind als deren Frontflächen.

Es ist ausgehend von diesem bekannten Stand der Technik eine der Aufgaben der vorliegenden Erfindung, ein verbessertes laminiertes Energiespeichersystem bereitzustellen, insbesondere ein Energiespeichersystem mit höherer Energiedichte.

### Beschreibung der Erfindung

Es hat sich nun für den Fachmann völlig überraschend herausgestellt, dass eine Batterie mit einer Mehrzahl von Schichten umfassend eine erste Schicht, die elektrisch leitend ist, eine zweite Schicht, die im Wesentlichen aus kohlenstofffaserverstärktem Kunststoff besteht, eine dritte Schicht, die aus glasfaserverstärktem Kunststoff besteht, eine vierte Schicht, die kohlenstofffaserverstärkten Kunststoff und LiFePO₄ besteht, wobei das Gewichtsverhältnis von LiFePO₄ zu Kohlenstofffaser 2:1 bis 2,5 zu 1 beträgt, eine fünfte Schicht, die elektrisch leitend ist, dadurch gekennzeichnet dass die Batterie im Wesentlichen von einer Schicht aus glasfasergefülltem Polyester umhüllt ist, den Nachteilen des Standes der Technik abhilft. Solche Batterien weisen lasttragende Eigenschaften auf und werden auch als Strukturbatterien bezeichnet. Als glasfasergefüllte Polyester können bevorzugt PET, PBT, oder PEI verwendet werden. Weiter kann in einer solchen Strukturbatterie 15 Gew.% CF₃SO₃Li (LiTriflat) in einer Elektrolytlösung vorliegen. Dabei ist es bevorzugt, wenn das elektrisch leitende Material der ersten und/oder der fünften Schicht gewählt wird unter Metall oder Graphen. Dabei ist es bevorzugt, wenn die umhüllende Schicht aus glasfasergefülltem Polyester auf der der Batterie abgewandten Seite im Wesentlichen mit Metall und/oder Keramik beschichtet ist. Eine solche Keramikschicht ist wasserdicht, insbesondere geeignet sind mit Tonmineralen gefüllte thermoplastische Kunststoffe, bevorzugt Polypropylen. Diese werden auch als clay-polymer composites oder clay-PPcomposites bezeichnet. Dabei ist es bevorzugt, wenn die umhüllende Schicht aus glasfasergefülltem Polyester Glasfasergewebe enthält. Dabei ist es bevorzugt, wenn die umhüllende Schicht aus glasfasergefülltem Polyester auf der der Strukturbatterie abgewandten Seite mit SiO₂ beschichtet ist. Das SiO₂ kann durch Plasmabeschichtung, CVD oder PVD aufgetragen werden. Dabei ist es bevorzugt, wenn die Kanten der ersten bis fünften Schicht treppenförmig angeordnet sind. Dadurch können die einzelnen Strukturbatterien miteinander verbunden werden. Auch eine Ausgestaltung der kurzen Kanten in Form von Nut und Feder ist geeignet. Die Erfindung umfasst auch ein Verfahren zur Herstellung einer Batterie nach einem der vorangehende Ansprüche dadurch gekennzeichnet, dass die erste und fünfte Schicht sowie die umhüllende Schicht durch AFP oder ATL positioniert und durch Laser oder Ultraschallschweißen konsolidiert werden sowie ein flächig mit einer Mehrzahl von erfindungsgemäßen Strukturbatterien versehenes Bauteil bei dem einzelne Strukturbatterien an ihren Kanten miteinander verbunden sind. Dabei ist es bevorzugt, wenn die verbundenen Strukturbatterien mittels einer beheizten Presse verbunden wurden.

Die oben beschriebenen Aspekte und weitere Aspekte, Merkmale und Vorteile der Erfindung können ebenfalls aus den Beispielen der Ausführungsformen entnommen werden, welche im Folgenden unter Bezugnahme auf die anhängenden Zeichnungen beschrieben werden.

### Kurze Beschreibung der Zeichnungen

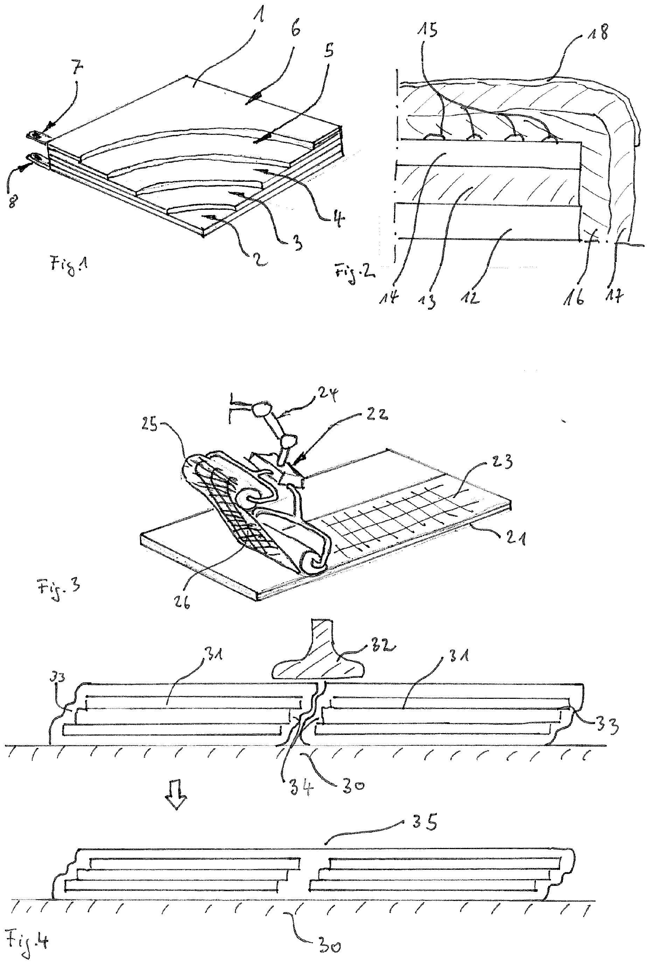

Figur 1 zeigt eine übliche Strukturbatterie, Figur 2 zeigt eine erfindungsgemäße Strukturbatterie sowie ihre Ummantelung, Figur 3 zeigt, wie eine Strukturbatterie unter Verwendung einer Ablegemaschine mit einer erfindungsgemäßen Umhüllung beschichtet werden kann und Figur 4 zeigt wie eine Mehrzahl von Strukturbatterien auf einer vorhandene Oberfläche positioniert und miteinander verbunden werden können.

In den Figuren werden gleiche Bezugszeichen für gleiche oder zumindest ähnliche Elemente, Komponenten oder Aspekte verwendet. Es wird angemerkt, dass im Folgenden Ausführungsformen im Detail beschrieben werden, die lediglich illustrative und nicht beschränkend sind.

### Detaillierte Beschreibung von Ausführungsformen

Figur 1 zeigt eine übliche Strukturbatterie (1). Diese ist durch einen schichtförmigen Aufbau gekennzeichnet. Auf einen flächig ausgebildeten Kollektor (2) ist ebenfalls flächig eine Anode aus Kohlenfaserverbundwerkstoff (3) aufgebracht. An diese schließt sich eine aus glasfaserverstärktem Kunststoff gebildete Trennschicht, ein Separator (4) an, auf den eine Kathode (5) folgt. Die Kathode (5) besteht aus kohlefaserverstärktem Kunststoff, dessen Oberfläche mit Lithiumeisenphosphat dotiert ist. Darauf folgt eine weitere Kollektorschicht (6). An der kathodischen Kollektorschicht (6) ist ein Anschluss (7) befestigt, während an die anodische Kollektorschicht (2) ebenfalls ein Anschluss (8) angebracht ist. Die Anschlüsse erlauben es aus der Strukturbatterie Strom zu entnehmen und einen Verbraucher anzuschließen.
Figur 2 zeigt eine erfindungsgemäße Strukturbatterie sowie ihre Ummantelung.
   Auf herkömmlich aufeinander geschichtet Anode, Kathode und Separatorschicht können Unter- und Oberseite der anodischen und katholischen Kollektoren in Form eines elektrisch leitenden Mediums aufgedruckt sein. Die Kollektoren sind mit Anschlüssen verbunden, die es erlauben die Batterie an einen elektrischen Verbraucher anzuschließen und Ladung zu entnehmen. Die Batterie wird ummantelt mit einer ersten Schicht (16) aus glasfaserverstärktem thermoplastischem Kunststoff. Als thermoplastischer Kunststoff können Polyethylenterephthalat, Polybutylenterephthalat oder Polyesterimid verwendet werden. Die eingebetteten Glasfasern können Kurzfasern, Langfasern, Gewebe oder Vlies darstellen. Diese nächste Schicht (16) schützt die Batterie vor mechanischen Einflüssen und isoliert sie elektrisch gegenüber der Umwelt. Um die erste Schicht herum schließt sich eine zweite Schicht (17) an, deren Aufgabe es ist die Batterie vor Feuchtigkeit oder chemischen Umwelteinflüssen zu schützen. Dazu wird eine Mischung aus Kunststoff und Tonmineralen verwendet. Diese Mischung weist thermoplastische Eigenschaften auf und erlaubt einen Schutz vor derartigen Medien durch ihren Gehalt an Tonmineralen, die bei Kontakt mit Wasser aufquellen. Auf die Oberfläche der zweiten Schicht (17) wird eine weitere Schicht (18) aufgebracht, die aus Siliziumdioxid besteht. Diese Schicht kann durch Plasmadesorption oder CVD aufgebracht werden und schützt die Strukturbatterie gegen Kratzer und Erosion. Der Verbund aus den Schichten (16), (17) und (18) kann die Batterie vor mechanischen Einschlägen, elektrischem Strom sowie thermischen Lasten schützen.
Figur 3 zeigt, wie eine Strukturbatterie (21) unter Verwendung einer Ablegemaschine (22) mit einer erfindungsgemäßen Umhüllung (23) beschichtet werden kann.
   Eine Ablegemaschine (22) kann beispielsweise ein Tapeleger oder eine Fiber-Placement-Maschine sein. Ein Tapeleger erlaubt es Bänder auf einer Oberfläche definiert abzulegen. Die Bänder können beispielsweise 5 bis 50 cm breit sein. Sie können als Rollenware verarbeitet werden und Klebeeigenschaften aufweisen, die ein Verrutschen der abgelegten Bänder verhindern können. Fiber-Placement-Maschinen unterscheiden sich im Wesentlichen durch die geringere Breite der abgelegten Bänder, die 5 mm bis 5 cm betragen kann. Die Umhüllung (23) kann mit einer Ablegemaschine (22) auf der eigentlichen Strukturbatterie abgelegt werden. Die Ablegemaschine (22) weist einen Roboter auf (24), der es erlaubt den Legekopf in die gewünschte Richtung und Position zu bringen und in gewünschte Richtung zu bewegen. Weiter umfasst eine Ablegemaschine (22) eine Rolle mit der thermoplastischen Schutzfolie (25). Mit der thermoplastischen Schutzfolie (25) können auch auf die Schutzfolie selbst aufgedruckte Leiterbahnen auf die Strukturbatterie (21) aufgebracht werden, die den kathodischen oder anodischen Kollektor (26) der Strukturbatterie bilden. Eine solche Ablegemaschine (22) erlaubt es mit hoher Geschwindigkeit Strukturbatterien (21) mit erfindungsgemäßen Umhüllungen (23) zu beschichten.
Figur 4 zeigt wie eine Mehrzahl von Strukturbatterien (31) auf einer vorhandenen Oberfläche (30) positioniert und miteinander verbunden werden können. Dazu muss die kurze Kante (33) der Strukturbatterie (31) treppenförmig oder in Form von Nut und Feder ausgebildet sein. Dies erlaubt ein formschlüssiges Aneinanderfügen mehrerer Batteriezellen (31). Durch eine entlang der Verbindungsstellen (34) der verschiedenen Batterien (31) positionierte beheizte Presse (32) kann die thermoplastisch ausgebildete Ummantelung der Batterie aufgeschmolzen werden, wodurch ein Verbinden der Zellen miteinander ermöglicht wird. Es resultieren mehrere verbundene Batteriezellen (35), die jeweils elektrisch voneinander getrennt sind. Damit kann beispielsweise die Oberfläche eines Fluggerätes flächig mit Strukturbatterien ausgestattet werden.

Während die Erfindung illustriert und beschrieben wurde im Detail in den Zeichnungen und der vorangegangenen Beschreibung, ist es beabsichtigt, dass derartige Illustrationen und Beschreibungen lediglich illustrativ oder exemplarisch und nicht restriktiv sind, so dass die Erfindung nicht durch die offenbarten Ausführungsformen beschränkt ist. In den Ansprüchen schließt das Wort "aufweisend" nicht andere Elemente aus und der unbestimmte Artikel "ein" schließt eine Mehrzahl nicht aus.

Alleinig der Umstand, dass bestimmte Merkmale in verschiedenen abhängigen Ansprüchen genannt sind, beschränkt nicht den Gegenstand der Erfindung. Auch Kombinationen dieser Merkmale können vorteilhaft eingesetzt werden. Die Bezugszeichen in den Ansprüchen sollen nicht den Umfang der Ansprüche beschränken.

### Bezugszeichenliste

- 1: Strukturbatterie
- 2: anodischer Kollektor
- 3: Anode
- 4: Separator
- 5: Kathode
- 6: kathodischer Kollektor
- 7, 8: Anschluss
- 12: Anode
- 13: Separator
- 14: Kathode
- 15: Kollektor
- 16: Schicht aus glasfaserverstärktem thermoplastischem Kunststoff
- 17: Schicht aus thermoplastischem Kunststoff mit Tonmineralen
- 18: Siliziumdioxidbeschichtung
- 21: Strukturbatterie
- 22: Ablegemaschine
- 23: Umhüllung
- 24: Roboter
- 25: Rolle mit thermoplastischer Schutzfolie
- 26: Kollektor
- 30: Oberfläche
- 31: Mehrzahl von Strukturbatterien
- 32: beheizte Presse
- 33: Kurze Kante der Strulturbatterien
- 34: Verbindungsstellen
- 35: verbundene Batteriezellen

## Patentansprüche

**1.** Batterie mit einer Mehrzahl von Schichten umfassend
eine erste Schicht, die elektrisch leitend ist,
eine zweite Schicht, die im Wesentlichen aus kohlenstofffaserverstärktem Kunststoff besteht,
eine dritte Schicht, die aus glasfaserverstärktem Kunststoff besteht,
eine vierte Schicht, die kohlenstofffaserverstärkten Kunststoff und LiFePO₄ besteht, wobei das Gewichtsverhältnis von LiFePO₄ zu Kohlenstofffaser 2:1 bis 2,5 zu 1 beträgt,
eine fünfte Schicht, die elektrisch leitend ist,
**dadurch gekennzeichnet dass** die Batterie im Wesentlichen von einer Schicht aus glasfasergefülltem Polyester umhüllt ist.

**2.** Batterie nach Anspruch 1 **dadurch gekennzeichnet, dass** das elektrisch leitenden Material der ersten und/oder der fünften Schicht gewählt wird unter Metall oder Graphen.

**3.** Batterie nach einem der vorangehenden Patentansprüche **dadurch gekennzeichnet, dass** die umhüllende Schicht aus glasfasergefülltem Polyester auf der der Batterie abgewandten Seite im Wesentlichen mit Metall und/oder Keramik beschichtet ist.
Batterie nach einem der vorangehenden Patentansprüche **dadurch gekennzeichnet, dass** die umhüllende Schicht aus glasfasergefülltem Polyester Glasfasergewebe enthält.

**4.** Batterie nach einem der vorangehenden Patentansprüche **dadurch gekennzeichnet, dass** die umhüllende Schicht aus glasfasergefülltem Polyester auf der der Batterie abgewandten Seite mit SiO₂ beschichtet ist.

**5.** Batterie nach einem der vorangehenden Patentansprüche **dadurch gekennzeichnet, dass** die Kanten der ersten bis fünften Schicht treppenförmig angeordnet sind.

**6.** Verfahren zur Herstellung einer Batterie nach einem der vorangehende Ansprüche **dadurch gekennzeichnet, dass** die erste und fünfte Schicht sowie die umhüllende Schicht durch AFP oder ATL positioniert und durch Laser oder Ultraschallschweißen konsolidiert werden.

**7.** Flächig mit einer Mehrzahl von Batterien nach einem der vorangehenden Patentansprüche versehenes Bauteil **dadurch gekennzeichnet, dass** einzelne Batterien an ihren Kanten miteinander verbunden sind.

**8.** Bauteil nach Anspruch 8 wobei die verbundenen Batterien nach einem der Ansprüche 1 bis 6 mittels einer beheizten Presse verbunden wurden.

**4.** Batterie nach einem der vorangehenden Patentansprüche **dadurch gekennzeichnet, dass** die umhüllende Schicht aus glasfasergefülltem Polyester auf der der Batterie abgewandten Seite mit SiO₂ beschichtet ist.

**5.** Batterie nach einem der vorangehenden Patentansprüche **dadurch gekennzeichnet, dass** die Kanten der ersten bis fünften Schicht treppenförmig angeordnet sind.

**6.** Verfahren zur Herstellung einer Batterie nach einem der vorangehende Ansprüche **dadurch gekennzeichnet, dass** die erste und fünfte Schicht sowie die umhüllende Schicht durch AFP oder ATL positioniert und durch Laser oder Ultraschallschweißen konsolidiert werden.

**7.** Flächig mit einer Mehrzahl von Batterien nach einem der vorangehenden Patentansprüche versehenes Bauteil **dadurch gekennzeichnet, dass** einzelne Batterien an ihren Kanten miteinander verbunden sind.

**8.** Bauteil nach Anspruch 7 wobei die verbundenen Batterien nach einem der Ansprüche 1 bis 6 mittels einer beheizten Presse verbunden wurden.
